# EUROPEAN PATENT APPLICATION

(11) **EP 4 663 496 A1**
(43) Date of publication of application: **17.12.2025**
(21) Application number: 24181164.5
(22) Date of filing: 10.06.2024
(51) Int. Cl.: B60W 10/16, B60W 10/184, B60W 30/02, B60W 30/045

(54) **DIFFERENTIAL LOCK CONTROL**

(71) Applicant: VOLVO TRUCK CORPORATION, 405 08 Göteborg (SE)
(72) Inventor: RAKHOLIA, Meet Vitthalbhai, 431 34 MÖLNDAL (SE); STRÄNGBERG, Erik Martin, 417 66 GÖTEBORG (SE); GROTH, Björn, 417 29 GÖTEBORG (SE); WÖLFINGER, Alexander, 442 65 MARSTRAND (SE)
(74) Representative: Kransell & Wennborg KB

(57) **Abstract**

A computer system comprising processing circuitry (28) configured to: receive an indication (29) of a driving situation where it would be desirable to disengage a differential lock (23) on the drive axle (15); receive a first indication (31) of a first road friction on a left side of the vehicle (3) and a second indication (33) of a second road friction on a right side of the vehicle (3); determine, based on the first (31) and second (33) indications, a first braking setting for a left side wheel (13a) and a second braking setting for a right side wheel (13b); and change driving mode for the vehicle (3) by controlling the differential lock (23) to disengage and controlling a braking system (25) of the vehicle to brake the left side wheel (13a) with the first braking setting, and to brake the right side wheel (13b) with the second braking setting.

## Description

### TECHNICAL FIELD

The disclosure relates generally to operation of a vehicle. In particular aspects, the disclosure relates to differential lock control in a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

To be able to engage a differential lock forcing wheels on a drive axle to rotate at the same rotational speed is generally beneficial for traction in certain driving situations. There are, however, driving situations where it may not be advantageous to have the differential lock engaged. Such driving situations may include high speed driving, and/or when turning.

When a driving situation that is not suitable for driving with the differential lock engaged is occurring, or is predicted to occur, it may therefore be beneficial to disengage the differential lock, so that the wheel(s) to the left and the wheel(s) to the right on the drive axle can rotate at different rotational speeds.

It would be desirable to improve the transition from engaged differential lock to disengaged differential lock.

### SUMMARY

According to a first aspect of the disclosure, there is provided a computer system comprising processing circuitry configured to receive, when a differential lock is engaged on a drive axle of a vehicle, an indication of a driving situation where it would be desirable to disengage the differential lock on the drive axle; receive a first indication of a first road friction on a left side of the vehicle and a second indication of a second road friction on a right side of the vehicle; determine, based on the first indication and the second indication, a first braking setting for a left side wheel on the drive axle and a second braking setting for a right side wheel on the drive axle; and change driving mode for the vehicle by controlling the differential lock to disengage and controlling at least one braking system of the vehicle to brake the left side wheel with the first braking setting, and to brake the right side wheel with the second braking setting. The first aspect of the disclosure may seek to improve the transition from engaged differential lock to disengaged differential lock. A technical benefit may include to provide for substantially maintained traction when controlling the differential lock to disengage. This can be achieved by using individual braking settings, which are based on indications of the road friction to the left and to the right of the vehicle, for the left side wheel and the right side wheel when changing the driving mode, while propulsion torque is being applied to the drive axle. Hereby, propulsion torque can be redistributed, in a *per se* known way, from a wheel experiencing a relatively low road friction to a wheel experiencing a relatively high road friction, in relation to the relatively low road friction. Thus, the vehicle is enabled to maintain traction while allowing the left side wheel and the right side wheel to rotate at different speeds.

Driving situations where it would be desirable to disengage, or "unlock", the differential lock of the drive axle may, for example, include when turning and/or when traveling with a speed higher than a predefined threshold speed. The first indication of the first road friction and the second indication of the second road friction may be any indication from which it can, at least, be concluded which of the first road friction and the second road friction is the highest (the highest friction coefficient). Thus, the first indication and the second indication may be visual indications, or direct or indirect friction measurements. For instance, the wheels of an undriven axle may be subjected to a known braking torque, and the resulting wheel slips on the left and rights sides may be evaluated. The at least one braking system may advantageously be a friction braking system, with individually controllable braking torque for the left side wheel and the right side wheel.

Optionally in some examples, including in at least one preferred example, the processing circuitry may be configured to: determine the first braking setting and the second braking setting in such a way that the first braking setting corresponds to a first braking torque, and the second braking setting corresponds to a second braking torque being greater than the first braking torque, when the second road friction on the right side of the vehicle is less than the first road friction on the left side of the vehicle. A technical benefit may include that this braking configuration provides for more propulsion torque on the left side wheel, through redistribution in the unlocked differential. This, in turn, provides for substantially maintained traction, compared to when the differential lock was engaged, while allowing the left side wheel and the right side wheel on the drive axle to rotate at different speeds. According to an example, braking torque may be applied substantially only to the right side wheel.

Optionally in some examples, including in at least one preferred example, the processing circuitry may be configured to: determine the first braking setting and the second braking setting in such a way that the first braking setting corresponds to a first braking torque, and the second braking setting corresponds to a second braking torque being less than the first braking torque, when the second road friction on the right side of the vehicle is greater than the first road friction on the left side of the vehicle. A technical benefit may include that this braking configuration provides for more propulsion torque on the right side wheel, through redistribution in the unlocked differential. This, in turn, provides for substantially maintained traction, compared to when the differential lock was engaged, while allowing the left side wheel and the right side wheel on the drive axle to rotate at different speeds. According to an example, braking torque may be applied substantially only to the left side wheel.

Optionally in some examples, including in at least one preferred example, the processing circuitry may be configured to, when changing driving mode for the vehicle: control the at least one braking system of the vehicle with an initial braking setting resulting in substantially maintained rotational speeds of the left side wheel and the right side wheel, in relation to when the differential lock was engaged, before controlling the at least one braking system of the vehicle to brake the left side wheel with the first braking setting, and to brake the right side wheel with the second braking setting. A technical benefit may include that the change in driving mode for the vehicle can be made smoother, so that ride quality can be improved. The transition from the initial braking setting to the first braking setting for the left side wheel and the second braking setting for the right side wheel may be gradual, and may take place during a sufficiently long time period for the transition to feel smooth. A sufficiently long time period may, for example, be at least 0.1 second. A longer time period may provide for a smoother transition, but if the time period is too long, loss of traction may occur. Therefore, the time period may advantageously be in the range 0.1 second to 1.5 second.

Optionally in some examples, including in at least one preferred example, the processing circuitry may be configured to start to control the at least one braking system of the vehicle with the initial braking setting within a predefined time after controlling the differential lock to disengage. A technical benefit may include that the change in driving mode for the vehicle can be made smoother, so that ride quality can be improved.

Optionally in some examples, including in at least one preferred example, the predefined time may be shorter than one second. A technical benefit may include that the risk of deterioration of the ride quality can be reduced.

Optionally in some examples, including in at least one preferred example, the processing circuitry may be configured to receive, when the differential lock is disengaged, an indication of a driving situation where it would be desirable to engage the differential lock; and change driving mode for the vehicle by controlling the differential lock to engage. A technical benefit may include that the differential lock can be re-engaged, to provide the desired traction without unnecessary wear on the brakes.

Optionally in some examples, including in at least one preferred example, the processing circuitry may be configured to, when changing driving mode for the vehicle: control the at least one braking system of the vehicle with a transitional braking setting resulting in substantially equal rotational speeds of the left wheel and the right wheel on the drive axle, before controlling the differential lock to engage. A technical benefit may include that the transition back to having the differential lock engaged can be made smoother, so that ride quality can be improved.

The computer system according to examples of the present disclosure may advantageously be included in a vehicle, further comprising a drive axle having a left side wheel and a right side wheel; a differential lock on the drive axle; and at least one braking system controllable to brake the left side wheel and the right side wheel with different braking settings.

According to a second aspect of the disclosure, there is provided a computer-implemented method, comprising: receiving, when a differential lock is engaged on a drive axle of a vehicle, an indication of a driving situation where it would be desirable to disengage the differential lock on the drive axle; receiving a first indication of a first road friction on a left side of the vehicle and a second indication of a second road friction on a right side of the vehicle; determining, based on the first indication and the second indication, a first braking setting for a left side wheel on the drive axle and a second braking setting for a right side wheel on the drive axle; and changing driving mode for the vehicle by controlling the differential lock to disengage and controlling at least one braking system of the vehicle to brake the left side wheel with the first braking setting, and to brake the right side wheel with the second braking setting. The second aspect of the disclosure may seek to improve the transition from engaged differential lock to disengaged differential lock. A technical benefit may include to provide for substantially maintained traction when controlling the differential lock to disengage. This can be achieved by using individual braking settings, which are based on indications of the road friction to the left and to the right of the vehicle, for the left side wheel and the right side wheel when changing the driving mode, while propulsion torque is being applied to the drive axle. Hereby, propulsion torque can be redistributed, in a per se known way, from a wheel experiencing a relatively low road friction to a wheel experiencing a relatively high road friction, in relation to the relatively low road friction. Thus, the vehicle is enabled to maintain traction while allowing the left side wheel and the right side wheel to rotate at different speeds.

Driving situations where it would be desirable to disengage, or "unlock", the differential lock of the drive axle may, for example, include when turning and/or when traveling with a speed higher than a predefined threshold speed. The first indication of the first friction and the second indication of the second friction may be any indication from which it can, at least, be concluded which of the first friction and the second friction is the highest (the highest friction coefficient). Thus, the first indication and the second indication may be visual indications, or direct or indirect friction measurements. For instance, the wheels of an undriven axle may be subjected to a known braking torque, and the resulting wheel slips on the left and rights sides may be evaluated. The at least one braking system may advantageously be a friction braking system, with individually controllable braking torque for the left side wheel and the right side wheel.

Optionally in some examples, including in at least one preferred example, the method may comprise: determining the first braking setting and the second braking setting in such a way that the first braking setting corresponds to a first braking torque, and the second braking setting corresponds to a second braking torque being greater than the first braking torque, when the second road friction on the right side of the vehicle is less than the first road friction on the left side of the vehicle. A technical benefit may include that this braking configuration provides for more propulsion torque on the left side wheel, through redistribution in the unlocked differential. This, in turn, provides for substantially maintained traction, compared to when the differential lock was engaged, while allowing the left side wheel and the right side wheel on the drive axle to rotate at different speeds. According to an example, braking torque may be applied substantially only to the right side wheel.

Optionally in some examples, including in at least one preferred example, the method may comprise: determining the first braking setting and the second braking setting in such a way that the first braking setting corresponds to a first braking torque, and the second braking setting corresponds to a second braking torque being less than the first braking torque, when the second road friction on the right side of the vehicle is greater than the first road friction on the left side of the vehicle. A technical benefit may include that this braking configuration provides for more propulsion torque on the right side wheel, through redistribution in the unlocked differential. This, in turn, provides for substantially maintained traction, compared to when the differential lock was engaged, while allowing the left side wheel and the right side wheel on the drive axle to rotate at different speeds. According to an example, braking torque may be applied substantially only to the left side wheel.

Optionally in some examples, including in at least one preferred example, the method may comprise, when changing driving mode for the vehicle: controlling the at least one braking system of the vehicle with an initial braking setting resulting in substantially maintained rotational speeds of the left side wheel and the right side wheel, in relation to when the differential lock was engaged, before controlling the at least one braking system of the vehicle to brake the left side wheel with the first braking setting, and to brake the right side wheel with the second braking setting. A technical benefit may include that the change in driving mode for the vehicle can be made smoother, so that ride quality can be improved. The transition from the initial braking setting to the first braking setting for the left side wheel and the second braking setting for the right side wheel may be gradual, and may take place during a sufficiently long time period for the transition to feel smooth. A sufficiently long time period may, for example, be at least 0.1 second. A longer time period may provide for a smoother transition, but if the time period is too long, loss of traction may occur. Therefore, the time period may be in the range 0.1 second to 1.5 second.

Optionally in some examples, including in at least one preferred example, the method may comprise start to control the at least one braking system of the vehicle with the initial braking setting within a predefined time after controlling the differential lock to disengage. A technical benefit may include that the change in driving mode for the vehicle can be made smoother, so that ride quality can be improved.

Optionally in some examples, including in at least one preferred example, the predefined time may be shorter than one second. A technical benefit may include that the risk of deterioration of the ride quality can be reduced.

Optionally in some examples, including in at least one preferred example, the method may comprise receiving, when the differential lock is disengaged, an indication of a driving situation where it would be desirable to engage the differential lock; and changing driving mode for the vehicle by controlling the differential lock to engage. A technical benefit may include that the differential lock can be re-engaged, to provide the desired traction without unnecessary wear on the brakes.

Optionally in some examples, including in at least one preferred example, the method may comprise, when changing driving mode for the vehicle: controlling the at least one braking system of the vehicle with a transitional braking setting resulting in substantially equal rotational speeds of the left wheel and the right wheel on the drive axle, before controlling the differential lock to engage. A technical benefit may include that the transition back to having the differential lock engaged can be made smoother, so that ride quality can be improved.

According to a third aspect of the disclosure, there is provided a computer program product comprising program code for performing, when executed by the processing circuitry, the method of the second aspect of the disclosure.

According to a fourth aspect of the disclosure, there is provided a non-transitory computer-readable storage medium comprising instructions, which when executed by the processing circuitry, cause the processing circuitry to perform the method of the second aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle combination according to an example.
**FIG. 2** is a functional illustration of an exemplary vehicle.
**FIG. 3** is an exemplary computer system according to an example.
**FIG. 4** is an exemplary method according to an example.
**FIG. 5** is an exemplary method according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

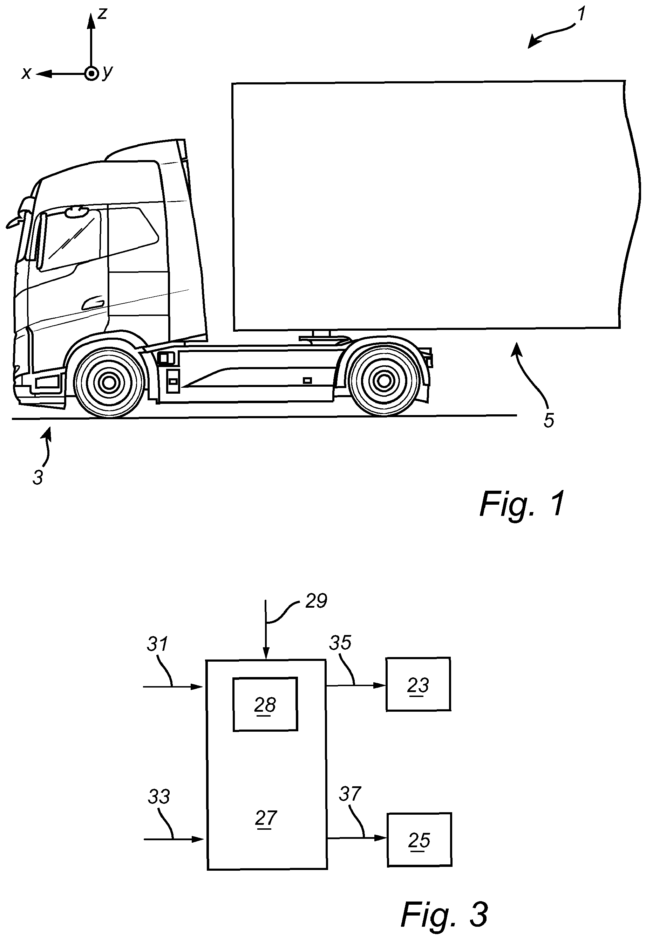

Fig. 1 is an exemplary vehicle combination 1 according to an example. Referring to Fig. 1, the exemplary vehicle combination 1 comprises a first vehicle 3 and a second vehicle 5 coupled to the first vehicle 3.

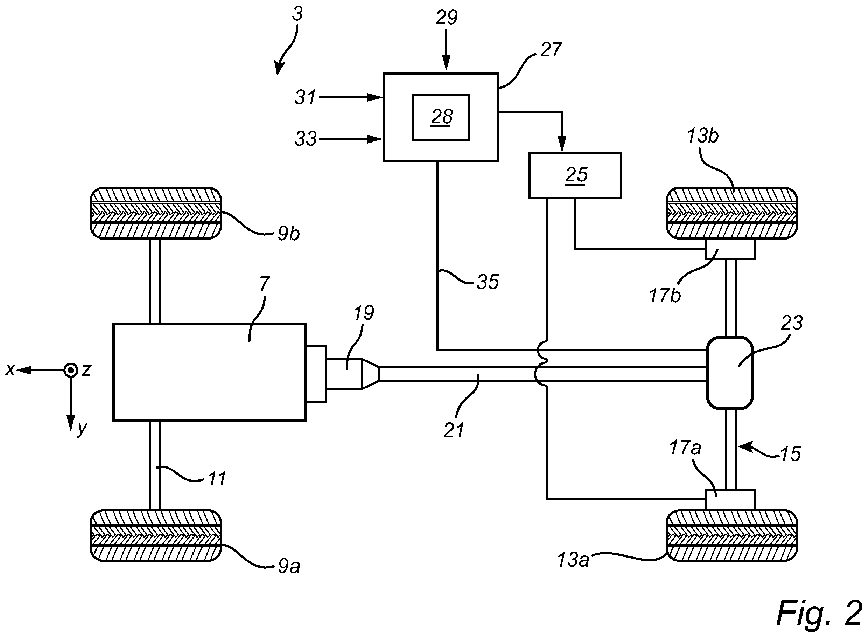

Fig. 2 is a functional illustration of an exemplary vehicle 3. Referring to Fig. 2, the exemplary vehicle 3 comprises a prime mover 7, a left side wheel 9a and a right side wheel 9b on an undriven axle 11, a left side wheel 13a and a right side wheel 13b on a drive axle 15, a left side brake actuator 17a controllable to individually brake the left side wheel 13a on the drive axle 15, and a right side brake actuator 17b controllable to individually brake the right side wheel 13b on the drive axle 15. To allow provision of propulsion torque from the prime mover 7 to the left side wheel 13a and the right side wheel 13b on the drive axle 15, the vehicle 1 further comprises a transmission 19, a propeller shaft 21, and a lockable differential 23, as is schematically indicated in Fig. 2. As is also indicated in Fig. 2, the vehicle 3 comprises a braking system 25, and a computer system 27 comprising processing circuitry 28. The braking system 25 is coupled to the left side brake actuator 17a and the right side brake actuator 17b, and the computer system 27 is coupled to the differential 23 and to the braking system 25.

As is schematically indicated in Fig. 2, the processing circuitry 28 of the computer system 27 is configured to receive an indication 29 of a driving situation, a first indication 31 of a first road friction on a left side of the vehicle 3, and a second indication 33 of a second road friction on a right side of the vehicle 3, and to provide engage/disengage commands 35 to the lockable differential 23, and to provide braking commands 37 to the braking system 25.

Fig. 3 is an exemplary computer system 27 according to an example. Referring to Fig. 3, the computer system 27 comprises processing circuitry 28 configured to receive, when a differential lock 23 is engaged on a drive axle 15 of a vehicle 3, an indication 29 of a driving situation where it would be desirable to disengage the differential lock 23 on the drive axle 15; receive a first indication 31 of a first road friction on a left side of the vehicle 3 and a second indication 33 of a second road friction on a right side of the vehicle 3; determine, based on the first indication 31 and the second indication 33, a first braking setting for a left side wheel 13a on the drive axle 15 and a second braking setting for a right side wheel 13b on the drive axle 15; and change driving mode for the vehicle 3 by controlling the differential lock 23 to disengage and controlling at least one braking system 25 of the vehicle to brake the left side wheel 13a with the first braking setting, and to brake the right side wheel 13b with the second braking setting.

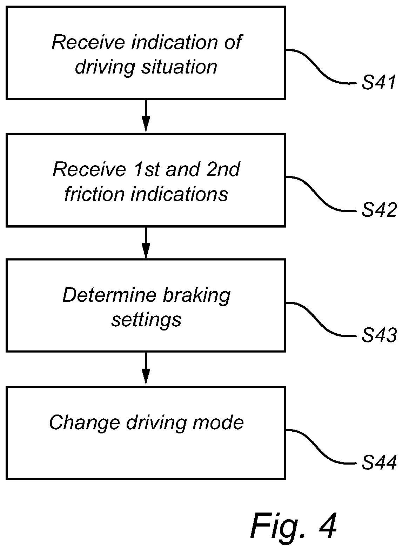

Fig. 4 is an exemplary method according to an example. Referring to the flowchart in Fig. 4, the method comprises receiving S41, by the processing circuitry 28 of the computer system 27 in Fig. 3, when the differential lock 23 is engaged on the drive axle 15 of the vehicle 3, an indication 29 of a driving situation where it would be desirable to disengage the differential lock 23 on the drive axle 15. Examples of such a driving situation may include making a turn with a radius of curvature being shorter than a predefined threshold radius of curvature, and/or high-speed driving, such as driving with a speed higher than a predefined threshold speed.

As is indicated in Fig. 4, the method further comprises receiving S42 a first indication 31 of a first road friction on a left side of the vehicle 3 and a second indication 33 of a second road friction on a right side of the vehicle 3.

Subsequently, the processing circuitry 28 determines S43, based on the first indication 31 and the second indication 33, a first braking setting for the left side wheel 13a on the drive axle 15 and a second braking setting for the right side wheel 13b on the drive axle 15.

Thereafter, the method proceeds to changing S44 driving mode for the vehicle 3 by controlling, by the processing circuitry 28, the differential lock 23 to disengage and controlling, by the processing circuitry 28, the braking system 25 to brake the left side wheel 13a with the first braking setting, and to brake the right side wheel 13b with the second braking setting.

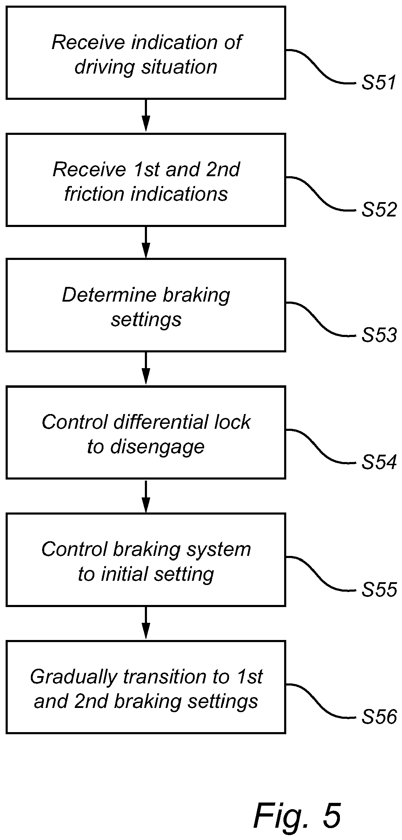

Fig. 5 is an exemplary method according to an example. Referring to the flowchart in Fig. 5, the method comprises receiving S51, by the processing circuitry 28 of the computer system 27 in Fig. 3, when the differential lock 23 is engaged on the drive axle 15 of the vehicle 3, an indication 29 of a driving situation where it would be desirable to disengage the differential lock 23 on the drive axle 15. Examples of such a driving situation may include making a turn with a radius of curvature being shorter than a predefined threshold radius of curvature, and/or high-speed driving, such as driving with a speed higher than a predefined threshold speed.

As is indicated in Fig. 5, the method further comprises receiving S52 a first indication 31 of a first road friction on a left side of the vehicle 3 and a second indication 33 of a second road friction on a right side of the vehicle 3.

Subsequently, the processing circuitry 28 determines S53, based on the first indication 31 and the second indication 33, a first braking setting for the left side wheel 13a on the drive axle 15 and a second braking setting for the right side wheel 13b on the drive axle 15. The first braking setting may be a first braking torque, and the second braking setting may be a second braking torque.

When the first 31 and second 33 indications indicate that the road friction is lower on the left side of the vehicle 3 than on the right side of the vehicle 3, the first braking setting may correspond to a non-zero first braking torque, and the second braking setting may correspond to a second braking torque, smaller than the first braking torque. For example, the second braking torque may be zero. When the first 31 and second 33 indications indicate that the road friction is lower on the right side of the vehicle 3 than on the right side of the vehicle 3, the first braking torque may be zero, and the second braking torque may be non-zero.

Thereafter, the method proceeds to start the change of driving mode for the vehicle 3 by controlling S54, by the processing circuitry 28, the differential lock 23 to disengage. Substantially simultaneously, or within a predefined time that may, for example, be shorter than two seconds, or be shorter than one second, the processing circuitry 28 controls S55 the braking system 25 with an initial braking setting resulting in substantially maintained rotational speeds of the left side wheel 13a and the right side wheel 13b, in relation to when the differential lock 23 was engaged, just before the differential lock 23 was controlled to disengage. This reduces the occurrence of jerkiness when the differential lock 23 is disengaged, providing for improved ride comfort.

To complete the change of the driving mode, the processing circuitry 28 then controls S56 the braking system 25 to gradually transition from the above-mentioned initial braking setting to the first braking and second braking settings determined based on the first 31 indication of the road friction on the left side of the vehicle 3, and the second 33 indication of the road friction on the right side of the vehicle 3. This gradual transition, which may take place during a time period of at least one tenth of a second, also contributes to reducing the occurrence of jerkiness when the differential lock 23 is disengaged, providing for improved ride comfort.

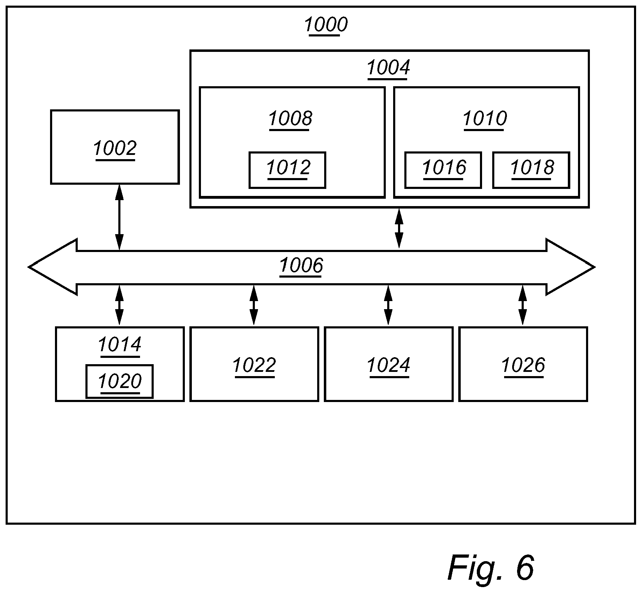

Fig. 6 is a schematic diagram of a computer system 1000 for implementing examples disclosed herein, such as for implementing examples of the computer system 27 according to examples. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet, or by direct wired or wireless communication. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or indication processing or for executing computer code stored in memory 1004. The processing circuitry 1002 may, for example, include a general-purpose processor, an application specific processor, a Digital indication Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (27) comprising processing circuitry (28) configured to:
receive, when a differential lock (23) is engaged on a drive axle (15) of a vehicle (3), an indication (29) of a driving situation where it would be desirable to disengage the differential lock (23) on the drive axle (15);
receive a first indication (31) of a first road friction on a left side of the vehicle (3) and a second indication (33) of a second road friction on a right side of the vehicle (3);
determine, based on the first indication (31) and the second indication (33), a first braking setting for a left side wheel (13a) on the drive axle (15) and a second braking setting for a right side wheel (13b) on the drive axle (15); and
change driving mode for the vehicle (3) by controlling the differential lock (23) to disengage and controlling at least one braking system (25) of the vehicle to brake the left side wheel (13a) with the first braking setting, and to brake the right side wheel (13b) with the second braking setting.

2. The computer system (27) of claim 1, wherein the processing circuitry (28) is configured to:
determine the first braking setting and the second braking setting in such a way that the first braking setting corresponds to a first braking torque, and the second braking setting corresponds to a second braking torque being greater than the first braking torque, when the second road friction on the right side of the vehicle is less than the first road friction on the left side of the vehicle.

3. The computer system (27) of claim 1, wherein the processing circuitry (28) is configured to:
determine the first braking setting and the second braking setting in such a way that the first braking setting corresponds to a first braking torque, and the second braking setting corresponds to a second braking torque being less than the first braking torque, when the second road friction on the right side of the vehicle is greater than the first road friction on the left side of the vehicle.

4. The computer system (27) of any of claims 1 to 3, wherein the processing circuitry (28) is configured to, when changing driving mode for the vehicle (3):
control the at least one braking system (25) of the vehicle with an initial braking setting resulting in substantially maintained rotational speeds of the left side wheel (13a) and the right side wheel (13b), in relation to when the differential lock (23) was engaged, before controlling the at least one braking system (25) of the vehicle (3) to brake the left side wheel (13a) with the first braking setting, and to brake the right side wheel (13b) with the second braking setting.

5. The computer system (27) of claim 4, wherein the processing circuitry (28) is configured to:
start to control the at least one braking system (25) of the vehicle (3) with the initial braking setting within a predefined time after controlling the differential lock (23) to disengage.

6. The computer system (27) of claim 5, wherein the predefined time is shorter than one second.

7. The computer system (27) of any of claims 1 to 6, wherein the processing circuitry (28) is configured to:
receive, when the differential lock (23) is disengaged, an indication (29) of a driving situation where it would be desirable to engage the differential lock (23); and
change driving mode for the vehicle (3) by controlling the differential lock (23) to engage.

8. The computer system (27) of claim 7, wherein the processing circuitry (28) is configured to, when changing driving mode for the vehicle (3):
control the at least one braking system (25) of the vehicle (3) with a transitional braking setting resulting in substantially equal rotational speeds of the left wheel (13a) and the right wheel (13b) on the drive axle (15), before controlling the differential lock (23) to engage.

9. A vehicle comprising:
a drive axle having a left side wheel and a right side wheel;
a differential lock on the drive axle;
at least one braking system controllable to brake the left side wheel and the right side wheel with different braking settings; and
the computer system of any of claims 1-8.

10. A computer-implemented method, comprising:
receiving, when a differential lock (23) is engaged on a drive axle (15) of a vehicle (3), an indication (29) of a driving situation where it would be desirable to disengage the differential lock (23) on the drive axle (15);
receiving a first indication (31) of a first road friction on a left side of the vehicle (3) and a second indication (33) of a second road friction on a right side of the vehicle (3);
determining, based on the first indication (31) and the second indication (33), a first braking setting for a left side wheel (13a) on the drive axle (15) and a second braking setting for a right side wheel (13b) on the drive axle (15); and
changing driving mode for the vehicle (3) by controlling the differential lock (23) to disengage and controlling at least one braking system (25) of the vehicle to brake the left side wheel (13a) with the first braking setting, and to brake the right side wheel (13b) with the second braking setting.

11. The method of claim 10, comprising:
determining the first braking setting and the second braking setting in such a way that the first braking setting corresponds to a first braking torque, and the second braking setting corresponds to a second braking torque being greater than the first braking torque, when the second road friction on the right side of the vehicle is less than the first road friction on the left side of the vehicle.

12. The method of claim 10 or 11, comprising:
controlling the at least one braking system (25) of the vehicle with an initial braking setting resulting in substantially maintained rotational speeds of the left wheel (13a) and the right wheel (13b), in relation to when the differential lock (23) was engaged, before controlling the at least one braking system (25) of the vehicle (3) to brake the left side wheel (13a) with the first braking setting, and to brake the right side wheel (13b) with the second braking setting.

13. The method of claim 12, comprising:
starting to control the at least one braking system (25) of the vehicle (3) with the initial braking setting within a predefined time after controlling the differential lock (23) to disengage.

14. The method of any of claims 10 to 13, comprising:
receiving, when the differential lock (23) is disengaged, an indication (29) of a driving situation where it would be desirable to engage the differential lock (23); and
changing driving mode for the vehicle (3) by controlling the differential lock (23) to engage.

15. A computer program product comprising program code for performing, when executed by the processing circuitry (17) comprised in the computer system (13) of any one of claims 1 to 8, the method of any of claims 10 to 14.
